# EUROPEAN PATENT APPLICATION

(11) **EP 3 121 951 A1**
(43) Date of publication of application: **25.01.2017**
(21) Application number: 14827147.1
(22) Date of filing: 20.03.2014
(51) Int. Cl.: H02P 15/00, H02K 49/02

(54) **SELF-CHARGING ELECTROMAGNETIC RETARDER**

(71) Applicant: TBK Co., Ltd., Machida-shi, Tokyo 194-0045 (JP)
(72) Inventor: KATO, Yukihiro, Machida-shi, Tokyo 194-0045 (JP); MIYOSHI, Akihiro, Machida-shi, Tokyo 194-0045 (JP); OBA, Mitsuyoshi, Machida-shi, Tokyo 194-0045 (JP)
(74) Representative: Kronthaler, Wolfgang N.K.
(86) International application number: PCT/JP2014/057703
(87) International publication number: WO 2015/140979

(57) **Abstract**

A self-charging type electromagnetic retarder having a main portion of the electromagnetic retarder consisting of a stator yoke, of a plurality of magnetic coils forming multi-phase connections, and of a steel rotor; a control device; an electric power generating type electromagnetic retarder potion having a driving device for a high revolution region consisting of transistors opened and closed by a drive pulse for the high revolution region issued from the control device, respectively; a capacitor portion storing therein an excess electric power; a diode for preventing a reverse-current; and a driving device for a low revolution region consisting of transistors opened and closed by a drive pulse for the low revolution region issued from the control circuit, respectively. The magnetic coils of each phase are connected with capacitors so as to form a resonance circuit, respectively. Each of the transistors for the high revolution region is connected in series to each of the multi-phase connections. Each of the transistors for the low revolution region is connected in series to each of the multi-phase connections through the capacitor portion and the diode. At the high revolution region, the excess electric power obtained from the electric power generating type electromagnetic retarder portion is stored in the capacitor portion, and at the low revolution region, the magnetic coils are excited by the electric power stored in the capacitor portion.

## Description

### FIELD OF THE INVENTION

The present invention relates to a self-charging type electromagnetic retarder, and more particularly, relates to a self-charging type electromagnetic retarder wherein at a high revolution region, an excess electric power obtained from an electric power generating type electromagnetic retarder portion is stored in a capacitor portion and at a low revolution region, the stored electric power is used for exciting magnetic coils so as to prevent a braking torque from being lowered.

### BACK GROUND ART

In a conventional electric power generating type electromagnetic retarder, magnetic coils are excited by an electric power obtained from a braking energy, so that an electric power source for exciting the magnetic coils can be eliminated.

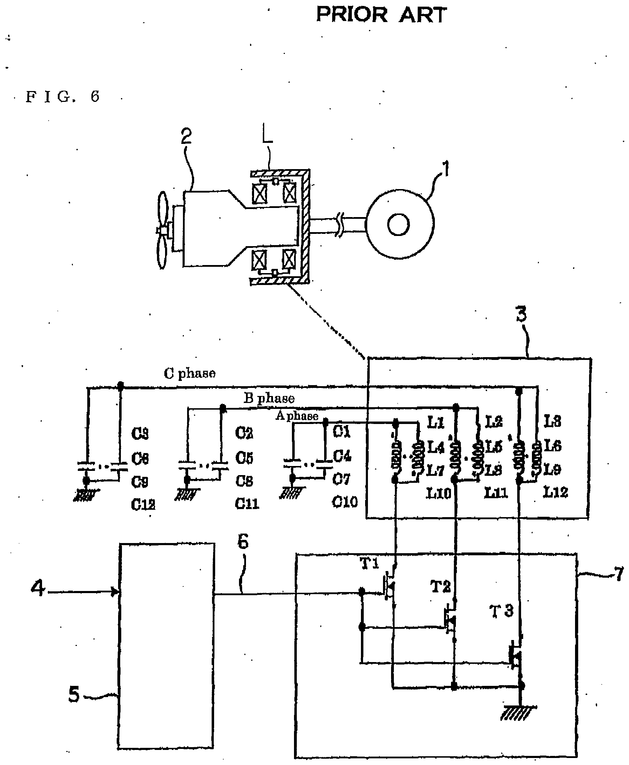

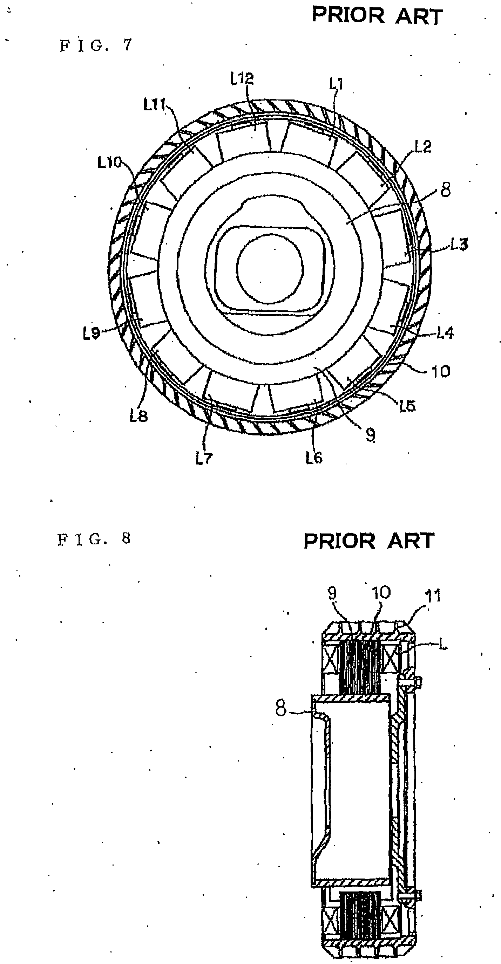

FIG.6 to FIG.8 show the conventional electric power generating type electromagnetic retarder. In FIG. 6, a reference numeral 1 denotes a tire of a car, 2 denotes an engine, 3 denotes a main portion of the electromagnetic retarder, 4 denotes an operation signal, 5 denotes a control device for processing the operation signal 4, 6 denotes a drive pulse issued from the control device 5, and 7 denotes a driving device for a high revolution region consisting of transistors T1 to T3 for a high revolution region opened and closed by the drive pulse 6, respectively.

As shown in FIG. 6 to FIG. 8, the main portion 3 consists of a stator 8, of a stator yoke 9 surrounding the stator 8, of a magnetic coil L having magnetic coils L1 to L12 arranged along a circle and spaced apart from one another on the stator yoke 9, of a steel rotor (drum) 10 surrounding the stator yoke 9 and rotated according to the rotation of the tire 1, each of the magnetic coils L1 to L12 having an iron core therein, and of fins 11 provided on the outer peripheral surface of the steel rotor 10. The magnetic coils L1 to L12 form three-phase connections of A phase, B phase and C phase.

Each of the magnetic coils L1, L2, L3, L7, L8 and L9 is opposite in polarity to each of the magnetic coils L4, L5, L6, L10, L11 and L12. As shown in FIG. 6, the transistor T1 of the driving device 7 is connected in series to the A phase connection consisting of coils L1, L4, L7 and L10. The transistor T2 is connected in series to the B phase connection consisting of coils L2, L5, L8 and L11. The transistor T3 is connected in series to the C phase connection consisting of coils L3, L6, L9 and L12.

According to the conventional retarder, the drive pulse 6 is generated when the operation signal 4 is applied to the control device 5, so that the transistors T1 to T3 of the driving device 7 are turned ON, and resonance circuits consisting of magnetic coils L1 to L12 and capacitors C1 to C12 are formed.

An electric voltage induced in the magnetic coils by the residual magnetic field of the steel rotor 10 becomes a three-phase AC voltage of a specific frequency by the function of the resonance circuits consisting of the magnetic coils and the capacitors, when the revolution number of the steel rotor 10 becomes faster than that of the rotary magnetic field calculated from the resonance frequency of the magnetic coils and the capacitors. In this state, an eddy current is generated in the steel rotor 10 according to the difference between the revolution number Ns of the rotary magnetic field generated by the three-phase AC voltage and the revolution number Nd of the steel rotor 10. By the eddy current generated in the steel rotor 10, the voltage of the magnetic coils is increased, so that the eddy current generated in the steel rotor 10 is further increased. The increase of the eddy current function is stopped at a point that the magnetic field is not increased even if the voltage of magnetic coils is increased. The eddy current in the steel rotor 10 generates a joule heat, so that a larger braking power is applied to the steel rotor 10. The braking power is converted into heat and the heat is radiated into the atmosphere from the fins 11 provided on the outer peripheral surface of the steel rotor 10.

### SUMMARY OF THE INVENTION

The task to be solved by the invention

In the conventional electric power generating type electromagnetic retarder, the magnetic coils are excited by an electric power obtained from a braking energy, so that an electric power source for exciting the magnetic coils can be eliminated.

However, at the low revolution region, the braking energy is insufficient, so that the electric power obtained becomes small.

An object of the present invention is to obviate the above defects. Manner for solving the task.

A self-charging type electromagnetic retarder according to an embodiment of the present invention comprises a main portion of the electromagnetic retarder consisting of a stator yoke, of a plurality of magnetic coils arranged along a peripheral direction of the stator yoke spaced apart from one another so as to form three-phase connections, and of a steel rotor surrounding the stator yoke and rotated according to the rotation of a tire, wherein each of the magnetic coils has an iron core therein, and the magnetic coils of each phase connection are connected with capacitors so as to form a resonance circuit, respectively; a control device having a detector for detecting a revolution number of the steel rotor; an electric power generating type electromagnetic retarder portion having a driving device for a high revolution region consisting of three transistors opened and closed by a drive pulse for the high revolution region issued from the control device, respectively, wherein each of the transistors for the high revolution region is connected in series to each of the three-phase connections; a capacitor portion storing therein an excess electric power obtained from the electric power generating type electromagnetic retarder portion; a diode for preventing a reverse current; and a driving device for a low revolution region consisting of three transistors opened and closed by a drive pulse for the low revolution region issued from the control circuit, respectively, wherein each of the three transistors for the low revolution region is connected in series to each of the three-phase connections through the capacitor portion and the diode; characterized in that at the high revolution region, the excess electric power obtained from the electric power generating type electromagnetic retarder portion is stored in the capacitor portion, and that at the low revolution region, the magnetic coils are excited by the electric power stored in the capacitor portion.

In the electromagnetic retarder according to the present invention, the three-phase connections are formed of a three-phase star connection.

In the electromagnetic retarder according to the present invention, the three-phase connections are formed of a three-phase delta connection.

A self-charging type electromagnetic retarder according to another embodiment of the present invention comprises a main portion of the electromagnetic retarder consisting of a stator yoke, of a plurality of magnetic coils arranged along a peripheral direction of the stator yoke spaced apart from one another so as to form three-phase connections, and of a steel rotor surrounding the stator yoke and rotated according to the rotation of a tire, wherein each of the magnetic coils has an iron core therein, and the magnetic coils of each phase connection are connected with capacitors so as to form a resonance circuit, respectively; a control device having a detector for detecting a revolution number of the steel rotor; an electric power generating type electromagnetic retarder portion having a driving device for a high revolution region consisting of two transistors opened and closed by a drive pulse for the high revolution region issued from the control device, respectively, wherein each of the transistors for the high revolution region is connected in series to each of the two-phase connections among the three-phase connections; a capacitor portion storing therein an excess electric power obtained from the electric power generating type electromagnetic retarder portion; a diode for preventing a reverse current; and a driving device for a low revolution region consisting of three transistors opened and closed by a drive pulse for the low revolution region issued from the control circuit, respectively, wherein each of the three transistors for the low revolution region is connected in series to each of the three-phase connections through the charging capacitor and the diode; characterized in that at the high revolution region, the excess electric power obtained from the electric power generating type electromagnetic retarder portion is stored in the capacitor portion, and that at the low revolution region, the magnetic coils are excited by the electric power stored in the capacitor portion.

A self-charging type electromagnetic retarder according to the other embodiment of the present invention comprises a self-charging type electromagnetic retarder comprising a main portion of the electromagnetic retarder consisting of a stator yoke, of a plurality of magnetic coils arranged along a peripheral direction of the stator yoke spaced apart from one another so as to form two-phase connections, and of a steel rotor surrounding the stator yoke and rotated according to the rotation of a tire, wherein each of the magnetic coils has an iron core therein, and the magnetic coils of each phase connection are connected with capacitors so as to form a resonance circuit, respectively; a control device having a detector for detecting a revolution number of the steel rotor; an electric power generating type electromagnetic retarder portion having a driving device for a high revolution region consisting of one transistor opened and closed by a drive pulse for the high revolution region issued from the control device, wherein the transistor for the high revolution region is connected in series to the one-phase connection in the two-phase connections; a capacitor portion storing therein an excess electric power obtained from the electric power generating type electromagnetic retarder portion; a diode for preventing a reverse current; and a driving device for a low revolution region consisting of two transistors opened and closed by a drive pulse for the low revolution region issued from the control circuit, respectively, wherein each of the two transistors for the low revolution region is connected in series to each of the two-phase connections through the charging capacitor and the diode; characterized in that at the high revolution region, the excess electric power obtained from the electric power generating type electromagnetic retarder portion is stored in the capacitor portion, and that at the low revolution region, the magnetic coils are excited by the electric power stored in the capacitor portion.

In the electromagnetic retarder of the present invention, the two-phase connections are formed of a two-phase V-connection.

An embodiment of the self-charging type electromagnetic retarder according to the present invention will be explained with reference to the drawings.

Parts of the retarder according to the present invention which are similar to corresponding parts of the conventional retarder shown in FIG.6 to FIG.8 have been given corresponding reference numerals and need not be further redescribed.

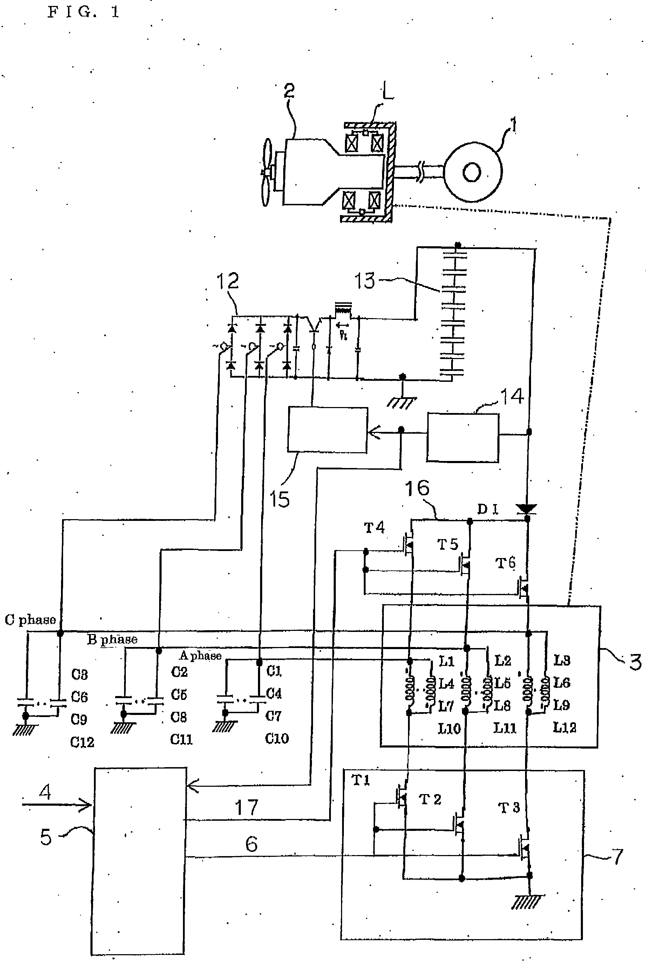

A self-charging type electromagnetic retarder of an embodiment of the present invention comprises, as shown in FIG. 1, a control device 5 having a detector for detecting a revolution number of a tire 1, an electric power generating type electromagnetic retarder portion having a driving device 7 consisting of transistors T1 to T3 for a high revolution region, a full wave rectifying and voltage reducing chopper 12, an electric double layer capacitor portion 13, a diode D1 for preventing a reverse current, a voltage detecting portion 14, a duty control portion 15, and a driving device 16 for a low revolution region consisting of transistors T4 to T6. The transistor T4 in the driving device 16 is connected in series to an A phase connection consisting of the magnetic coils L1, L4, L7 and L10 through the capacitor portion 13 and the diode D1, the transistor T5 in the driving device 16 is connected in series to a B phase connection consisting of the magnetic coils L2, L5, L8 and L11 through the capacitor portion 13 and the diode D1, and the transistor T6 in the driving device 16 is connected in series to a C phase connection consisting of the magnetic coils L3, L6, L9 and L12 through the capacitor portion 13 and the diode D1. At the high revolution region, the transistors T1 to T3 are opened and closed by a drive pulse 6 issued from the control device 5, respectively, the magnetic coils are excited and the capacitor portion 13 is charged by an electric power obtained from a braking energy. At the low revolution region, the transistors T4 to T6 are opened and closed by a drive pulse 17 issued from the control device 5, respectively, and the magnetic coils are excited by an electric power stored in the capacitor portion 13.

As stated above, at the high revolution region, in the self-charging type electromagnetic retarder according to the present invention, a generated excess electric power of AC three-phases is full wave rectified and reduced in voltage by the chopper 12, the excess electric power is stored in the electric double layer capacitor portion 13, and the voltage of the capacitor portion 13 is applied on the control device 5. The charging to the capacitor portion 13 is stopped when the voltage of the capacitor portion 13 is reached to a charge completion voltage VL.

At the low revolution region, the transistors T4 to T6 in the driving device 16 are turned ON by the drive pulse 17 issued from the control device 5, so that the magnetic coils form the magnetic field, the eddy current is generated in the steel rotor, and the braking power is applied to the steel rotor, and that a sufficient control torque can be obtained.

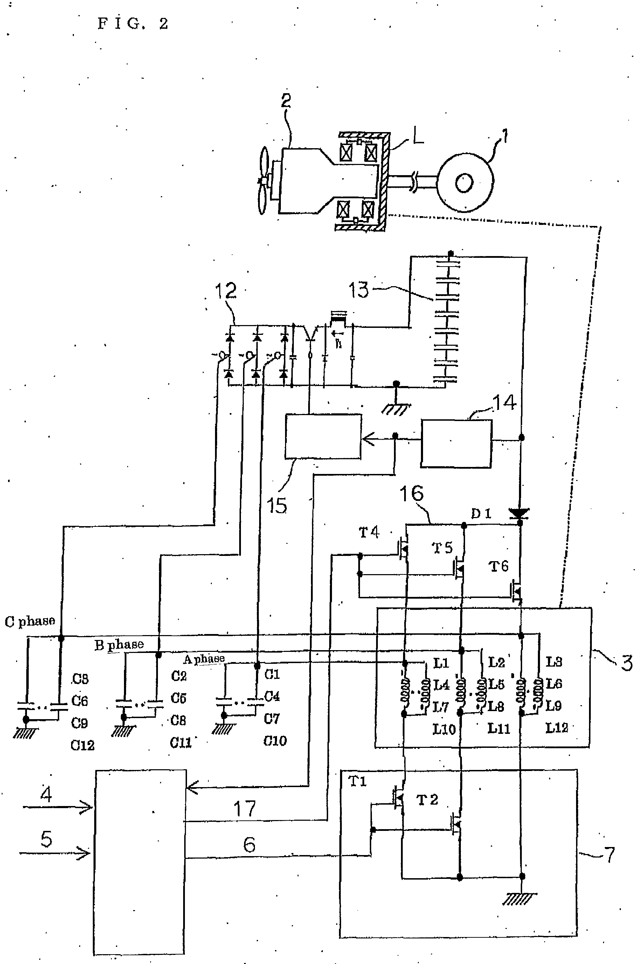

In a self-charging type electromagnetic retarder of another embodiment of the present invention, as shown in FIG.2, the transistor T3 is deleted from the driving device 7 for the high revolution region shown in FIG. 1.

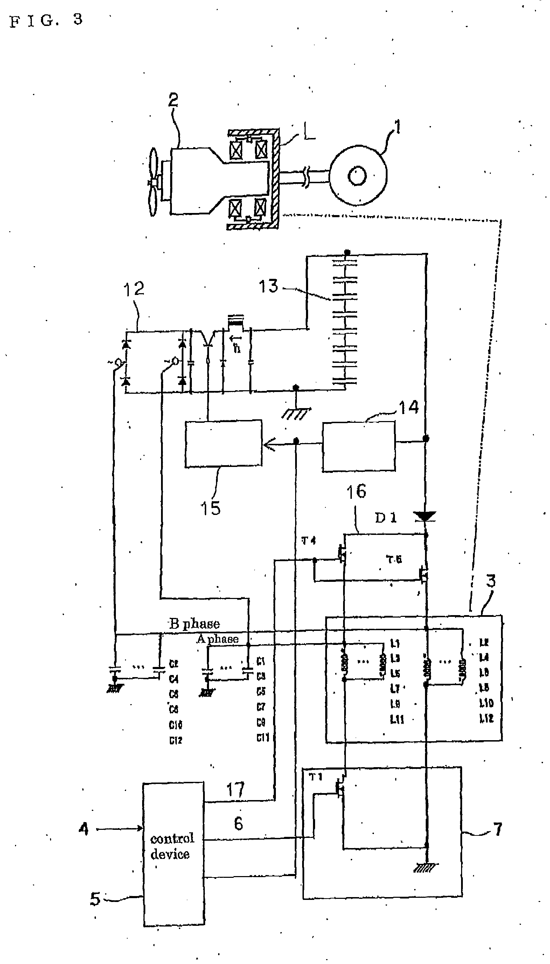

In a self-charging type electromagnetic type retarder of the other embodiment of the present invention, as shown in FIG. 3, the transistors T2 and T3 are deleted from the driving device 7 for the high revolution region, and the transistor T6 is deleted from the driving device 16 for the low revolution region shown in FIG. 1.

In this embodiment, the transistor T4 in the driving device 16 is connected in series to the A phase connection consisting of the magnetic coils L1, L3, L5, L7, L9 and L11, through the capacitor portion 13 and the diode D1, and the transistors T5 in the driving device 16 is connected in series to the B phase connection consisting of the magnetic coils L2, L4, L6, L8, L10 and L12, through the capacitor portion 13 and the diode D1. Further, each of the magnetic coils L1, L2, L5, L6, L9 and L10 is opposite in polarity to each of the magnetic coils L3, L4, L7, L8, L11 and L12.

The A phase and the B phase connections form a two-phase V-connection.

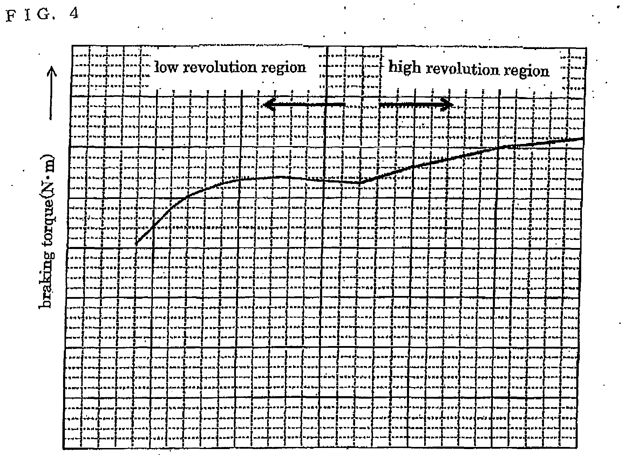

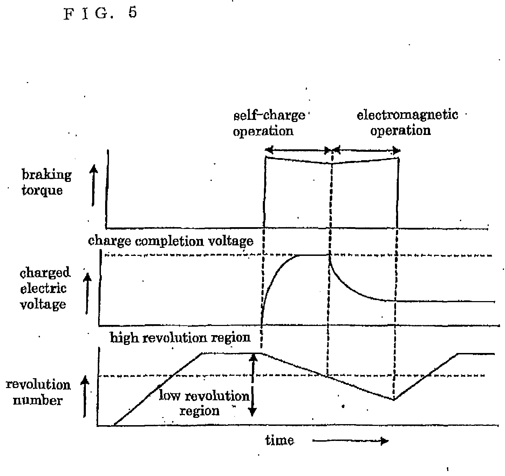

FIG. 4 is a graph depicting the relationship of the braking torque and the revolution number of the rotor of the electromagnetic retarder according to the present invention. FIG. 5 is a graph depicting the relationship of the braking torque, a charged electric voltage, and the revolution number of the rotor of the electromagnetic retarder according to the present invention, and a time.

### EFFECT OF THE INVENTION

According to the self-charging type electromagnetic retarder of the present invention, following effects can be obtained.
(1) In the self-charging type electromagnetic retarder according to the present invention, at the high revolution region, generated excess electric power is stored in the capacitor portion and at the low revolution region, the stored electric power is used for exciting the magnetic coils so as to prevent the braking torque from being lowered, so that such a problem in the conventional electromagnetic retarder that the braking torque is small at the low revolution region can be solved.
(2) In the self-charging type electromagnetic retarder according to the present invention, a high braking torque with low consumed electric power during a low revolution and a high revolution can be obtained.
(3) In the self-charging type electromagnetic retarder according to the present invention, it is not necessary to increase the power of the battery or the alternator in order to increase the braking torque of the electromagnetic retarder.

### BRIEF DESCRIPTION OF THE DRAWINGS

[FIG.1] A schematic depiction of a self-charging type electromagnetic retarder according to an embodiment of the present invention.
[FIG.2] A schematic depiction of a self-charging type electromagnetic retarder according to an another embodiment of the present invention.
[FIG.3] A schematic depiction of a self-charging type electromagnetic retarder according to the other embodiment of the present invention.
[FIG.4] A graph depicting the relationship of a braking torque and the revolution number of the rotor of the electromagnetic retarder according to the present invention.
[FIG.5] A graph depicting the relationship of the braking torque, a charged electric voltage, and the revolution number of the rotor of the electromagnetic retarder according to the present invention, and a time.
[FIG.6] A schematic depiction of a conventional electric power generating type electromagnetic retarder.
[FIG.7] A vertically sectional front view of a main portion of the conventional electromagnetic retarder shown in FIG.6.
[FIG.8] A vertically sectional side view of the main portion of the conventional electromagnetic type retarder shown in FIG.6.

### EXPLANATION OF CORD

- 1: tire
- 2: engine
- 3: main portion of retarder
- 4: operation signal
- 5: control device
- 6: drive pulse
- 7: driving device for the high revolution region
- 8: stator
- 9: stator yoke
- 10: steel rotor
- 11: fin
- 12: full wave rectifying and voltage reducing chopper
- 13: electric double layer capacitor portion
- 14: voltage detecting portion
- 15: duty control portion
- 16: driving device for the low revolution region
- 17: drive pulse

## Claims

1. A self-charging type electromagnetic retarder comprising a main portion of the electromagnetic retarder consisting of a stator yoke, of a plurality of magnetic coils arranged along a peripheral direction of the stator yoke spaced apart from one another so as to form three-phase connections, and of a steel rotor surrounding the stator yoke and rotated according to the rotation of a tire, wherein each of the magnetic coils has an iron core therein, and the magnetic coils of each phase connection are connected with capacitors so as to form a resonance circuit, respectively; a control device having a detector for detecting a revolution number of the steel rotor; an electric power generating type electromagnetic retarder portion having a driving device for a high revolution region consisting of three transistors opened and closed by a drive pulse for the high revolution region issued from the control device, respectively, wherein each of the transistors for the high revolution region is connected in series to each of the three-phase connections; a capacitor portion storing therein an excess electric power obtained from the electric power generating type electromagnetic retarder portion; a diode for preventing a reverse current; and a driving device for a low revolution region consisting of three transistors opened and closed by a drive pulse for the low revolution region issued from the control circuit, respectively, wherein each of the three transistors for the low revolution region is connected in series to each of the three-phase connections through the capacitor portion and the diode; **characterized in that** at the high revolution region, the excess electric power obtained from the electric power generating type electromagnetic retarder portion is stored in the capacitor portion, and that at the low revolution region, the magnetic coils are excited by the electric power stored in the capacitor portion.

2. The electromagnetic retarder as claimed in claim 1, wherein the three-phase connections are formed of a three-phase star connection.

3. The electromagnetic retarder as claimed in claim 1, wherein the three-phase connections are formed of a three-phase delta connection.

4. A self-charging type electromagnetic retarder comprising a main portion of the electromagnetic retarder consisting of a stator yoke, of a plurality of magnetic coils arranged along a peripheral direction of the stator yoke spaced apart from one another so as to form three-phase connections, and of a steel rotor surrounding the stator yoke and rotated according to the rotation of a tire, wherein each of the magnetic coils has an iron core therein, and the magnetic coils of each phase connection are connected with capacitors so as to form a resonance circuit, respectively; a control device having a detector for detecting a revolution number of the steel rotor; an electric power generating type electromagnetic retarder portion having a driving device for a high revolution region consisting of two transistors opened and closed by a drive pulse for the high revolution region issued from the control device, respectively, wherein each of the transistors for the high revolution region is connected in series to each of the two-phase connections among the three-phase connections; a capacitor portion storing therein an excess electric power obtained from the electric power generating type electromagnetic retarder portion; a diode for preventing a reverse current; and a driving device for a low revolution region consisting of three transistors opened and closed by a drive pulse for the low revolution region issued from the control circuit, respectively, wherein each of the three transistors for the low revolution region is connected in series to each of the three-phase connections through the charging capacitor and the diode; **characterized in that** at the high revolution region, the excess electric power obtained from the electric power generating type electromagnetic retarder portion is stored in the capacitor portion, and that at the low revolution region, the magnetic coils are excited by the electric power stored in the capacitor portion.

5. A self-charging type electromagnetic retarder comprising a main portion of the electromagnetic retarder consisting of a stator yoke, of a plurality of magnetic coils arranged along a peripheral direction of the stator yoke spaced apart from one another so as to form two-phase connections, and of a steel rotor surrounding the stator yoke and rotated according to the rotation of a tire, wherein each of the magnetic coils has an iron core therein, and the magnetic coils of each phase connection are connected with capacitors so as to form a resonance circuit, respectively; a control device having a detector for detecting a revolution number of the steel rotor; an electric power generating type electromagnetic retarder portion having a driving device for a high revolution region consisting of one transistor opened and closed by a drive pulse for the high revolution region issued from the control device, wherein the transistor for the high revolution region is connected in series to the one-phase connection in the two-phase connections; a capacitor portion storing therein an excess electric power obtained from the electric power generating type electromagnetic retarder portion; a diode for preventing a reverse current; and a driving device for a low revolution region consisting of two transistors opened and closed by a drive pulse for the low revolution region issued from the control circuit, respectively, wherein each of the two transistors for the low revolution region is connected in series to each of the two-phase connections through the charging capacitor and the diode; **characterized in that** at the high revolution region, the excess electric power obtained from the electric power generating type electromagnetic retarder portion is stored in the capacitor portion, and that at the low revolution region, the magnetic coils are excited by the electric power stored in the capacitor portion.

6. The electromagnetic type retarder as claimed in claim 5, wherein the two-phase connections are formed of a two-phase V-connection.

## Amended claims

### Amended claims under Art. 19.1 PCT

1. (Amended) A self-charging type electromagnetic retarder comprising a main portion of the electromagnetic retarder consisting of a stator yoke, of a plurality of magnetic coils arranged along a peripheral direction of the stator yoke spaced apart from one another so as to form three-phase connections, and of a steel rotor surrounding the stator yoke and rotated according to the rotation of a tire, wherein each of the magnetic coils has an iron core therein, and the magnetic coils of each phase connection are connected with capacitors so as to form a resonance circuit, respectively; a control device having a detector for detecting a revolution number of the steel rotor; an electric power generating type electromagnetic retarder portion having a driving device for a high revolution region consisting of three transistors opened and closed by a drive pulse for the high revolution region issued from the control device, respectively, wherein each of the transistors for the high revolution region is connected in series to each of the three-phase connections; a capacitor portion storing therein an excess electric power obtained from the electric power generating type electromagnetic retarder portion; a diode for preventing a reverse current; and a driving device for a low revolution region consisting of three transistors opened and closed by a drive pulse for the low revolution region issued from the control device, respectively, wherein each of the three transistors for the low revolution region is connected in series to each of the three-phase connections through the capacitor portion and the diode; **characterized in that** at the high revolution region, the excess electric power obtained from the electric power generating type electromagnetic retarder portion is stored in the capacitor portion, and that at the low revolution region, the magnetic coils are excited by the electric power stored in the capacitor portion.

2. (Original) The electromagnetic retarder as claimed in claim 1, wherein the three-phase connections are formed of a three-phase star connection.

3. (Original) The electromagnetic retarder as claimed in claim 1, wherein the three-phase connections are formed of a three-phase delta connection.

4. (Amended) A self-charging type electromagnetic retarder comprising a main portion of the electromagnetic retarder consisting of a stator yoke, of a plurality of magnetic coils arranged along a peripheral direction of the stator yoke spaced apart from one another so as to form three-phase connections, and of a steel rotor surrounding the stator yoke and rotated according to the rotation of a tire, wherein each of the magnetic coils has an iron core therein, and the magnetic coils of each phase connection are connected with capacitors so as to form a resonance circuit, respectively; a control device having a detector for detecting a revolution number of the steel rotor; an electric power generating type electromagnetic retarder portion having a driving device for a high revolution region consisting of two transistors opened and closed by a drive pulse for the high revolution region issued from the control device, respectively, wherein each of the transistors for the high revolution region is connected in series to each of the two-phase connections among the three-phase connections; a capacitor portion storing therein an excess electric power obtained from the electric power generating type electromagnetic retarder portion; a diode for preventing a reverse current; and a driving device for a low revolution region consisting of three transistors opened and closed by a drive pulse for the low revolution region issued from the control device, respectively, wherein each of the three transistors for the low revolution region is connected in series to each of the three-phase connections through the charging capacitor and the diode; **characterized in that** at the high revolution region, the excess electric power obtained from the electric power generating type electromagnetic retarder portion is stored in the capacitor portion, and that at the low revolution region, the magnetic coils are excited by the electric power stored in the capacitor portion.

5. (Amended) A self-charging type electromagnetic retarder comprising a main portion of the electromagnetic retarder consisting of a stator yoke, of a plurality of magnetic coils arranged along a peripheral direction of the stator yoke spaced apart from one another so as to form two-phase connections, and of a steel rotor surrounding the stator yoke and rotated according to the rotation of a tire, wherein each of the magnetic coils has an iron core therein, and the magnetic coils of each phase connection are connected with capacitors so as to form a resonance circuit, respectively; a control device having a detector for detecting a revolution number of the steel rotor; an electric power generating type electromagnetic retarder portion having a driving device for a high revolution region consisting of one transistor opened and closed by a drive pulse for the high revolution region issued from the control device, wherein the transistor for the high revolution region is connected in series to the one-phase connection in the two-phase connections; a capacitor portion storing therein an excess electric power obtained from the electric power generating type electromagnetic retarder portion; a diode for preventing a reverse current; and a driving device for a low revolution region consisting of two transistors opened and closed by a drive pulse for the low revolution region issued from the control device, respectively, wherein each of the two transistors for the low revolution region is connected in series to each of the two-phase connections through the charging capacitor and the diode; **characterized in that** at the high revolution region, the excess electric power obtained from the electric power generating type electromagnetic retarder portion is stored in the capacitor portion, and that at the low revolution region, the magnetic coils are excited by the electric power stored in the capacitor portion.

6. (Original) The electromagnetic type retarder as claimed in claim 5, wherein the two-phase connections are formed of a two-phase V-connection.

Statement under Art. 19.1 PCT
The original claims 1, 4 and 5 were amended according to such an opinion in the International Search Report that " the above control circuit " in claims is a typographical error of -- the above control device--.
